(19) Europäisches Patentamt / European Patent Office / Office européen des brevets

(11) EP 1 527 144 B1

(12) **EUROPÄISCHE PATENTSCHRIFT**

(45) Veröffentlichungstag und Bekanntmachung des Hinweises auf die Patenterteilung:
**12.01.2011 Patentblatt 2011/02**

(21) Anmeldenummer: **03735694.6**

(22) Anmeldetag: **30.06.2003**

(51) Int Cl.:
***C09D 175/04*** (2006.01) ***C09D 7/12*** (2006.01)
***C08K 3/36*** (2006.01) ***C08K 9/06*** (2006.01)

(86) Internationale Anmeldenummer:
**PCT/EP2003/006950**

(87) Internationale Veröffentlichungsnummer:
**WO 2004/018578 (04.03.2004 Gazette 2004/10)**

(54) **BESCHICHTUNGSSTOFF, VERFAHREN ZU SEINER HERSTELLUNG UND SEINE VERWENDUNG**

COATING MATERIAL, RELATED PRODUCTION METHOD AND USE

MATERIAU DE REVETEMENT, PROCEDE DE PRODUCTION ET UTILISATION ASSOCIES

(84) Benannte Vertragsstaaten:
**AT BE BG CH CY CZ DE DK EE ES FI FR GB GR HU IE IT LI LU MC NL PT RO SE SI SK TR**

(30) Priorität: **31.07.2002 DE 10236146**

(43) Veröffentlichungstag der Anmeldung:
**04.05.2005 Patentblatt 2005/18**

(73) Patentinhaber: **BASF Coatings GmbH**
**48165 Münster (DE)**

(72) Erfinder:
- **BAUMGART, Hubert**
  **48162 Münster (DE)**
- **JURCZIK, Simone**
  **48308 Senden (DE)**
- **GEBAUER, Beate**
  **48165 Münster (DE)**

(74) Vertreter: **Leifert & Steffan**
**Patentanwälte**
**Burgplatz 21-22**
**40213 Düsseldorf (DE)**

(56) Entgegenhaltungen:
**EP-A- 0 076 377** **EP-A- 1 092 758**
**US-A- 4 614 683** **US-A- 5 976 701**

- **DATABASE WPI Section Ch, Week 199431 Derwent Publications Ltd., London, GB; Class A23, AN 1994-253047 XP002252594 -& JP 06 184493 A (KANSAI PAINT CO LTD), 5. Juli 1994 (1994-07-05)**
- **DATABASE WPI Section Ch, Week 200029 Derwent Publications Ltd., London, GB; Class A26, AN 2000-333356 XP002252595 -& JP 2000 104047 A (NITTO KAGAKU KK), 11. April 2000 (2000-04-11)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 527 144 B1

## Beschreibung

### Gebiet der Erfindung

Die vorliegende Erfindung betrifft die Verwendung eines Beschichtungsstoffs für die Herstellung von Beschichtungen, insbesondere Lackierungen.

### Stand der Technik

Die Verwendung von hydrophilen oder hydrophoben Nanopartikeln auf der Basis von pyrogenem Siliziumdioxid in Beschichtungsstoffen ist bekannt.

Hier und im folgenden ist unter der Eigenschaft »hydrophil« die konstitutionelle Eigenschaft eines Moleküle oder einer funktionellen Gruppe zu verstehen. In die wäßrige Phase einzudringen oder darin zu verbleiben. Demgemäß ist unter der Eigenschaft »hydrophob« die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thleme Verlag, Stuttgart, New York, 1998, »Hydrophille«, »Hydrophoble«, Seiten 294 und 295, verwiesen.

Die Nanopartikel werden den Beschichtungsstoffen zu unterschiedlichen Zwecken zugesetzt. So können ale in Wasserbasislackschichten das Einbrechen (strike-in) bei der Applikation von Klarlacken nach dem Naß-in-naß-Verfahren verhindern. In konventionellen, d. h. organische Lösemittel enthaltenden, Beischichtungsstoffen können sie als Rheologiahilfsmittel eingesetzt werden und können die Neigung der Beschichtungsstoffe zur Läuferbildung reduzieren. Darüber hinaus können sie die Kratzfestigkeit der aus den betreffenden Beschichtungsstoffen hergestellten Beschichtungen verbessern.

So ist beispielsweise aus der deutschen Patentanmeldung DE 199 24 172 A1 die Verwendung von hydrophoben Nanopartikeln auf der Basis von Siliziumdioxid oder von hydrophilen Nanopartikeln auf der Basis von Siliziumdioxid bekannt. Die Verwendung von Gemischen aus hydrophoben Nanopartikeln und hydrophilen Nanopartikeln wird nicht gelehrt.

Bei allen Vorteilen, welche die Verwendung der hydrophilen und hydrophoben Nanopartikel auf der Basis von Siliziumdioxid in Beschichtungsstoffen bietet, bereitet sie im Falle von transparenten Baschichtungsstoffen oder Klarlacken, die vor allem der Herstellung von klaren, transparenten, kratzfesten Klarlacklerungen dienen, erhebliche Probleme.

Werden die hydrophoben Nanopartikel in den Klarlacken in Mengen verwandet, die eine gute Kratzfestigkeit bewirken, sind die betreffenden Klarlackierungen zwar kratzfest aber matt und von einem vergleichsweise unbefriedigenden Verlauf. Die Verwendung von hydrophilen Nanopartikeln verbessert dagegen die Klarheit, die Transparenz und den Verlauf der betreffenden Klarlackierungen, sie vermag aber nicht deren Kratzfestigkeit signifikant zu verbessern.

### Aufgabe der Erfindung

Aufgabe der vorliegenden Erfindung ist es, die Verwendung eines Beschichtungsstoffs bereitzustellen, der die Nachteile des Standes der Technik nicht mehr länger aufweist, in einfacher Weise und sehr gut reproduzierbar hergestellt werden kann und Beschichtungen, insbesondere Klarlackierungen, liefert, die kratzfest, klar, transparent, hoch glänzend und brillant sind und einen sehr guten Verlauf und eine sehr gute Oberflächenglätte haben.

### Die erfindungsgemäße Lösung

Demgemäß wurde die Verwendung eines physikalisch, thermisch, mit aktinischer Strahlung oder thermisch und mit aktinischer Strahlung härtbaren Beschichtungsstoffes als klare und transparente Klarlacklerung im Rahmen farb- und/oder effektgebender Mehrschichtlacklerungen in der Automobillackierung, wobei der Beschichtungsstoff

(A) mindestens eine Art von hydrohoben Nanopartikeln auf der Basis von Siliziumdioxid und
(B) mindestens eine Art von hydrophilen Nanopartikeln auf der Basis von Siliziumdioxid mit einer inneren Oberfläche nach BET > 300 $m^2/g$ enthält,

und wobei das Gewichtsverhältnis zwischen hydrophilen und hydrophoben Nanopartikeln 4:1 bis 1:4 beträgt, bereitgestellt.

**Die Vorteile der erfindungsgemäßen Lösung**

Im Hinblick auf den Stand der Technik war es überraschend und für den Fachmann nicht vorhersehbar, daß sich trotz der Verwendung von hydrophilen Nanopartikeln (B) auch konventionelle erfindungsgemäße Beschichtungsstoffe In einfacher Weise und sicher reproduzierbar herstellen ließen.

Außerdem wer es überraschend, daß die erfindungsgemäß verwendeten Beschichtungsskoffe lagerstabil waren und ein sehr gutes Applikationsverhaklten aufwiesen. Insbesondere neigten sie nach der Applikation nicht mehr zur Läuferbildung an senkrechten Flächen.

Noch mehr überrasche daß die von deckenden Pigmenten freien erfindungsgemäß verwendeten Beschichtungsstoffe hochglänzende, brillante, von Oberflächenstörungen freie, glatte, klare, transparente, kratzfeste Beschichtungen, insbesondere Klarlackierungen, lieferten. Diese besonderen Vorteile traten überraschenderweise auch bei Klarlackierungen einer Schichtdicke >50 μm auf.

Die erfindungsgemäßen Beschichtungsstoffe und die hieraus hergestellten erfindungsgemäß verwendeten Beschichtungen waren daher überraschend breit anwendbar. Vor allem waren sie für die Herstellung von Formteilen, insbesondere optischen Formteilen, von Folien und für das Beschichten oder Lackieren von Kraftfahrzeugkarosserien und Teilen hiervon, Kraftfahrzeugen im Innen- und Außenbereich, Bauwerken im innen- und Außenbereich, Türen, Fenstem und Möbeln sowie im Rahmen der industriellen Lackierung für das Lackieren von Kunststofftellen, insbesondere transparenten Kunststofftellen, Klelntellen, Colis, Container, Emballagen, elektrotechnischen Bautellen und weißer Ware sowie für das Beschichten von Hohlglasartikeln hervorragend geeignet.

**Die ausführliche Beschreibung der Erfindung**

Die wesentlichen Bestandteile der erfindungsgemäß verwendeten Beschichtungsstoffe sind

(A) mindestens eine, Insbesondere eine, Art von hydrophoben Nanopartikeln auf der Basis von Siliziumdioxid und
(B) mindestens eine, insbesondere eine, Art von hydrophilen Nanopartikeln auf der Basis von Siliziumdioxid mit einer inneren Oberfläche nach BET >300, vorzugsweise >340 und insbesondere >350 $m^2/g$, wobei

das Gewichtsverhältnis von hydrophoben Nanopartikeln (A) zu hydrophilen Nanopartikeln (B) 1 : 4 bis 4: 1 beträgt, bevorzugt 3:7 bis 7:3 und insbesondere 2:3 bis 3:2 beträgt.

Der Gehalt der Beschichtungsstoffe an den hydrophoben Nanopartikeln (A) und den hydrophilen Nanopartikeln (B) kann ebenfalls sehr breit varileren und richtet sich nach den Erfordemissen das Einzelfalls, beispielsweise nach der Höhe der Kratzfestigkelt, die eingestellt werden soll. Vorzugsweise liegt der Gehalt bei 0,3 bis 6, bevorzugt 0,6 bis 4, besonders bevorzugt 0,8 bis 3 und insbesondere 1 bis 2,4 Gew.-%, jeweils bezogen auf den Gesamtfastkörpergehalt des erfindungsgemäß verwendeten Beschichtungsstoffs.

Vorzugsweise ist die Primärtellchengröße der Nanopartikel (A) und (B) <35, bevorzugt <20 und insbesonders <10 nm.

Das Siliziumdioxid, des die Basis der Nanopartikel (A) und (B) bildet, kann nach den unterschiedlichsten üblichen und bekannten Verfahren hergestellten werden. Vorzugsweise handelt es sich um pyrogenes Siliziumdioxid. Die Agglomerate und Aggregate seiner Primärpartikel haben eine kettenförmige Struktur und werden durch die Flammenhydrolyse von Siliziumtetrachlorid In einer Knallgasflamme hergestellt.

Das Siliziumdioxid, Insbesondere das pyrogene Siliziumdioxid, ist als solches hydrophil und kann ohne weitere Modifizierung seiner Oberfläche als hydrophile Nanopartikel (B) eingesetzt werden, d.h., diese bestehen bevorzugt aus pyrogenem Siliziumdioxid.

Vorzugsweise werden die hydrophoben Nanopartikel (A) durch die Oberflächenmodifizierung von pyrogenem Siliziumdioxid mit hydrophobe Gruppen enthaltenden Verbindungen hergestellt.

Als hydrophobe Nanopartikel (A) geeignet sind bevorzugt anorganische Nanopartikel, die an ihrer Oberfläche hydrophobe Gruppen tragen. Beispiele für geeignete hydrophobe Nanopartikel (A) sind Umsetzungsprodukte von hydrophilen Nanopartikel, wie insbesondere die weiter unten als Nanopartikel (B) beschriebenen Nanopartikel, mit Verbindungen mit hydrophoben Gruppen, insbesondere mit organofunktionellen Silicium-Verbindungen (I) mit mindestens einer gegenüber den hydrophilen Gruppen der Nanopartikel (B) reaktiven funktionellen Gruppe (la) und mit mindestens einem hydrophoben Rest (Ib). Bevorzugt haben die Verbindungen (I) keine weiteren, gegenüber den weiteren Bestandteilen des Beschichtungsmittels reaktive Gruppen, insbesondere keine weiteren, gegenüber den Bindemitteln und/oder Vernetzern reaktive Gruppen.

Besonders bevorzugt werden als Verbindungen (I) organofunktionelle Siliciumverbindungen mit mindestens einer Alkylgruppe mit 1 bis 50 C-Atomen, insbesondere mit 1 bis 10 C-Atomen, und mit mindestens einer hydrolysierbaren Gruppe bzw. mit mindestens einer OH- bzw. NH-Gruppe eingesetzt. Beispiele für Verbindungen (I) sind Alkylalkoxysilane, insbesondere Dialkyldialkoxysilane und Alkyltrialkoxysilane, Alkylhalogensilane, insbesondere Alkylchlorsilane, bevorzugt Trialkylchlorsilane und Dialkyldichlorsilane, Alkylpolysiloxane, Dialkylpolysiloxane und Alkyldisilazane u.ä. Geeignet als Verbindung (I) sind auch verschiedene monomere und/oder oligomere Kieselsäureester, die Methoxy-, Ethoxy- oder n- bzw. i-Propoxygruppen haben und einen Oligomerisierungsgrad von 1 bis 50, insbesondere 2 bis 10, ganz besonders bevorzugt von 3 bis 5 aufweisen.
Beispiele für geeignete organofunktionelle Verbindungen (I) sind auch die in der DE-A-100 49 628 beschriebenen organofunktionellen Siliciumverbindungen.

Beispiele für geeignete Verbindungen (I) sind ferner die im Handel erhältlichen und bekannten Produkte, die beispielsweise von der Firma Hüls unter der Marke DYNASILAN® vertrieben werden.

Besonders bevorzugt werden als Verbindungen (I) Dimethyldichlorsilan und/oder Hexamethyldisilazan und/oder Octyltrimethoxysilan und/oder Dimethylpolysiloxan eingesetzt.

Ganz besonders bevorzugt werden als hydrophobe Nanopartikel (A) Nanopartikel auf Basis der Reaktionsprodukte von $SiO_2$ und Dimethyldichlorsilan und/oder Hexamethyldisilazan, insbesondere Reaktionsprodukte von $SiO_2$ und Dimethyldichlorsilan, eingesetzt.

Beispiele für einsetzbare hydrophobe Nanopartikel (A) sind übliche und bekannte Produkte, wie beispielsweise von der Firma Degussa unter der Marke Aerosil®, insbesondere Aerosil® 8200, R106, R972 , R974, R805 oder R812, oder der Firma Wacker unter der Marke oder Typenbezeichnung HDK, insbesondere HDK H 15, H 18, H 20, H 30 oder 2000, vertrieben.

Bezüglich verwendbarer Kieselsäuren wird z.B. auf die Firmenschrift "Pyrogene Kieselsäuren-Aerosil®" der Sivento, Degussa-Hüls AG verwiesen.

Als hydrophile Nanopartikel (B) geeignet sind bevorzugt anorganische Nanopartikel, die an ihrer Oberfläche hydrophile Gruppen tragen. Beispiele für geeignete anorganische hydrophile Nanopartikel (B) sind Nanopartikel auf Basis der Oxide und/oder Mischoxide einschließlich der Oxidhydrate mindestens eines Metalls oder Halbmetalls der zweiten bis sechsten Hauptgruppe, der ersten bis achten Nebengruppe des Periodensystems der Elemente oder der Lanthaniden, insbesondere Oxide und/oder Mischoxide einschließlich Oxidhydrate aus der Reihe der Elemente Si, Al, Ti, Zr und/oder Ce. Beispiele hierfür sind Nanopartikel auf Basis $SiO_2$, wie pyrogen hergestellte Kleseisäure, Silikate, $Al_2O_3$, Aluminlumhydroxid, Alumosilikate, $TiO_2$, Titanate, $ZrO_2$ oder Zirkonate, $CeO_2$, insbesondere Nanopartikel auf Basis von pyrogener Kieselsäure. Besonders bevorzugt werden als hydrophile Nanopartikel (B) anorganische Nanopartikel eingesetzt, die an Oberfläche nicht durch Umsetzung mit verschiedenen organischen Verbindungen modifiziert wurden, ganz besonders bevorzugt nichtmodifizierte pyrogene Kieselsäure.

Beispiele für geeignete hydrophile Nanopartikel (B) sind auch die im Handel erhältlichen üblichen und bekannten Produkte auf Basis von $SiO_2$, die beispielsweise von der Firma Degussa unter der Marke Aerosil® R 380 oder von der Firma Wacker unter der Typenbezeichnung T 40 vertrieben werden.

Die erfindungsgemäß verwendeten Beschichtungsstoffe können flüssig oder fest sein.

Die flüssigen erfindungsgemäß verwendeten Beschichtungsstoffe können konventionelle Beschichtungsstoffe oder im wesentlichen oder völlig wasserfreie und lösemittelfreie Beschichtungsstoffe (100%-Systeme) sein. Die festen erfindungsgemäß verwendeten Beschichtungsstoffe können Pulverlacke sein.

Dabei können die erfindungsgemäß verwendeten Beschichtungsstoffe physikalisch, thermisch, mit aktinischer Strahlung oder thermisch und mit aktinischer Strahlung härtbar sein. Unter aktinischer Strahlung ist hier und im folgenden elektromagnetische Strahlung, wie nahes Infrarot (NIR), sichtbares Licht, UV-Strahlung oder Röntgenstrahlung, Insbesondere UV-Strahlung, und Korpuskularstrahlung, wie Elektronenstrahlung, zu verstehen. Die gemeinsame Härtung mit Wärmeenergie und aktinischer Strahlung wird auch als Dual-Cure bezeichnet

Die thermisch härtbaren erfindungsgemäß verwendeten Beschichtungsstoffe und die erfindungsgemäß verwendeten Dual-Cure-Beschichtungsstoffe können selbstvernetzend und/oder fremdvernetzend sein. Sie können Einkomponentensystem seln, In denen alle Bestandteile nebeneinander vorliegen. Sie können aber auch Zwei-oder Mehrkomponentensysteme, insbesondere Zwelkomponentensysteme, sein, In denen die Vernetzungsmittel wegen ihrer hohen Reaktivität bis zur Applikation der erfindungsgemäßen Beschichtungsstoffe getrennt von ihren übrigen Bestandtellen gelagert und erst kurz vor der Anwendung mit diesen vermischt werden.

Bevorzugt werden die flüssigen Beschichtungsstoffe, besonders bevorzugt die konventionellen Beschichtungsstoffe, ganz besonders bevorzugt die pigmentfreien, konventionellen Beschichtungsstoffe und Insbesondere die pigmentfreien, konventionellen, thermisch oder Dual-Cure-härtbaren Beschichtungsstoffe erfindüngsgemäß verwendet.

Die erfindungsgemäß verwendeten Beschichtungsstoffe können auch für die unterschiedlichsten anderen Verwendungszwecke, insbesondere als Füller oder Steinschlagschutzgrundierungen, Basislacke oder Unidecklacke eingesetzt werden.

Die konventionellen erfindungsgemäß verwendeten Einkomponentenklarlackes enthalten bekanntermaßen hydroxylgruppenhaltige Bindemittel und Vernetzungsmittel, wie blockierte Polylsocyanate, Tris(alkoxycarbonylamino) triazine und/oder Aminoplastharze (vgl. die deutschen Patentanmeldungen DE 199 24 172 A1 oder DE 199 24171 A1). In einer weiteren Variante enthalten sie als Bindemittel Polymere mit seitenständigen Carbamat- und/oder Allophanatgruppen und gegebenenfalls carbamat- und/oder allophanatmodifizerte Aminoplastharze als Vernetzungsmittel (vgl. die

amerikanischen Patentschriften US 5,474,811 A1, US 5,356,669 A1 oder US 5,605,965 A1, die Internationalen Patentanmeldungen WO 84/10211, WO 94/10212 oder WO 94/10213 oder die europäischen Patentanmeldungen EP 0 594 068 A1, EP 0 594 071 A1 oder EP 0 594142 A1).

Die erfindungsgemäß verwendeten Zweikomponentenklarlacke, Insbesondere die konventionellen, enthalten als wesentliche Bestandteile bekanntermaßen hydroxylgruppenhaltige Bindemittel und Polyisocyanate als Vernetzungsmittel, welche bis zu ihrer Verwendung getrennt gelagert werden (vgl. die deutschen Patentanmeldungen DE 199 24 172 A1 oder DE 199 24 171 A1).

Die erfindungsgemäß verwendeten Dual-Cure-Klarlacke sind vorzugsweise konventionelle Einkomponenten- oder Zweikomponentenklarlacke, die zusätzlich mit aktinischer Strahlung aktivierbare funktionelle Gruppen und/oder zusätzliche Bestandteile mit solchen funktionellen Gruppen enthalten. Besonders bevorzugt werden Acrylatgruppen als mit aktinischer Strahlung aktivierbare funktionelle Gruppen eingesetzt. Beispiele geeigneter zusätzlicher Bestandteile sind isocyanatoacrylate, Urethanacrylate oder multifunktionelle Acrylate, wie Dipentaerythritpentaacrylat (vgl. die Patentanmeldungen EP 0 982 800 A1, EP 0 844 286 A1, WO 98/40170 und DE 199 14 896 A1).

Bevorzugt werden Beschichtungsmittel auf Basis von hydroxylgruppenhaltlgen Bindemitteln, insbesondere Polyacrylatharzen und hydroxylgruppenreaktiven Vernetzern, insbesondere Isocyanatgruppenhaltigen Vernetzern und/oder Tris(alkoxy-carbonylamino)triazinen und/oder Aminoplastharzen, eingesetzt. Die OH-Zahl geeigneter Bindemittel kann dabei im allgemeinen 15 bis 300, bevorzugt 30 bis 250, besonders bevorzugt 60 bis 200, ganz besonders bevorzugt 70 bis 180 und insbesondere 80 bis 170, betragen.

Im folgenden wird ein erfindungsgemäß verwendetes bevorzugtes BeschichtungsSystem beschrieben:

Es werden bevorzugt Polyacrylatharze als Bindemittel eingesetzt. Im Falle der Polyacrylatharze für nichtwäßrige Beschichtungsstoffe kann das Bindemittel insbesondere ein Polyacrylatharz sein, welches herstellbar ist, indem (a) 16 bis 51 Gew.-%, vorzugsweise 16 bis 28 Gew.-%, eines hydroxylgruppenhaltigen Esters der Acrylsäure oder Methacrylsäure oder eines Gemisches aus solchen Monomeren, (b) 32 bis 84 Gew.-%, vorzugsweise 32 bis 63 Gew.-%, eines von (a) verschiedenen aliphatischen oder cycloaliphatischen Esters der Acrylsäure oder Methacrylsäure mit vorzugsweise mindestens 4 C-Atomen im Alkoholrest oder eines Gemisches aus solchen Monomeren, (c) 0 bis 2 Gew.-%, vorzugsweise 0 bis 1 Gew.-%, einer ethylenisch ungesättigten Carbonsäure oder einer Mischung aus ethylenisch ungesättigten Carbonsäuren und (d) 0 bis 30 Gew.-%, vorzugsweise 0 bis 20 Gew.-%, eines von (a), (b) und (c) verschiedenen ethylenisch ungesättigten Monomers oder eines Gemisches aus solchen Monomeren zu einem Polyacrylatharz mit einer Säurezahl von 0 bis 25, vorzugsweise 0 bis 8, einer Hydroxylzahl von 80 bis 200, vorzugsweise 80 bis 120, und einem zahlenmittleren Molekulargewicht von 1.500 bis 10.000, vorzugsweise 2.000 bis 5.000 polymerisiert werden, wobei die Summe der Gewichtsanteile der Komponenten (a), (b), (c) und (d) stets 100 Gew.-% ergibt.

Die Herstellung der bevorzugt eingesetzten Polyacrylatharze kann nach allgemein gut bekannten Polymerisationsverfahren in Masse, Lösung oder Emulsion erfolgen. Polymerisationsverfahren zur Herstellung von Polyacrylatharzen sind allgemein bekannt und vielfach beschrieben (vgl. z.B.: Houben Weyl, Methoden der organischen Chemie, 4. Auflage, Band 14/1, Seite 24 bis 255 (1961)).

Weitere Beispiele geeigneter (Co)Polymerisationsverfahren für die Herstellung der Polyacrylatharze werden in den Patentschriften DE-A-197 09 465, DE-C-197 09 476, DE-A-28 48 906, DE-A-195 24 182, EP-A-0 554 783, WO 95/27742, DE-A-38 41 540 oder WO 82/02387 beschrieben.

Vorteilhaft sind Taylorreaktoren, insbesondere für die Copolymerisation in Masse, Lösung oder Emulsion.

Die eingesetzten Polyacrylatharze werden vorzugsweise mit Hilfe des Lösungspolymerisationsverfahrens hergestellt. Hierbei wird üblicherweise ein organisches Lösemittel bzw. Lösemittelgemisch vorgelegt und zum Sieden erhitzt. In dieses organische Lösemittel bzw. Lösemittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und I60°C, vorzugsweise zwischen 130 und I50°C. Als Polymerisationsinitiatoren werden vorzugsweise freie Radikale bildende Initiatoren eingesetzt. Initiatorkraft und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Dialkylperoxide, wie Di-tert.-Butylperoxid oder Dicumyl-peroxid; Hydroperoxide, wie Cumolhydroperoxid oder tert.-Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Azodinitrile wie Azobisisobutyronitril oder C-C-spaltende Initiatoren wie Benzpinakolsilylether.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, daß die eingesetzten Polyacrylatharze ein zahlenmittleres Molekulargewicht von 1.500 bis 10.000, vorzugsweise 2.000 bis 5.000 (bestimmt durch Gelpermeationschromatographie unter Verwendung von Polystyrol als Eichsubstanz) aufweisen.

Die Säurezahl der erfindungsgemäß eingesetzten Polyacrylatharze kann vom Fachmann durch Einsatz entsprechender Mengen der Komponente (c) eingestellt werden. Analoges gilt für die Einstellung der Hydroxylzahl. Sie ist über die Menge an eingesetzter Komponente (a) steuerbar.

Als Komponente (a) kann im Prinzip jeder hydroxylgruppenhaltige Ester der Acrylsäure oder Methacrylsäure oder ein Gemisch aus solchen Monomeren eingesetzt werden. Als Beispiele werden genannt: Hydroxyalkylester der Acrylsäure, wie z.B. Hydroxyethylacrylat, Hydroxypropylacrylat, Hydroxybutylacrylat, insbesondere 4-Hydroxybutylacrylat; Hydroxyalkylester der Methacrylsäure, wie z.B. Hydroxyethylmethacrylat, Hydroxypropylmethacrylat, Hydroxybutylmethacrylat, insbesondere 4-Hydroxybutylmethacrylat; Umsetzungsprodukte aus cyclischen Estern, wie z.B. ε-Caprolacton und Hydroxyalkylestern der Acrylsäure bzw. Methacrylsäure.

Die Zusammensetzung der Komponente (a) wird vorzugsweise so ausgewählt, daß bei alleiniger Polymerisation der Komponente (a) ein Polyacrylatharz mit einer Glasübergangstemperatur von -50 bis +70, vorzugsweise -30 bis +50°C erhalten wird. Die Glasübergangstemperatur kann vom Fachmann unter Zuhilfenahme der Formel

$$1/T_G = \sum_{n=1}^{n=x} W_n/T_{Gn}$$

$T_G$ = Glasübergangstemperatur des Polymeren
x = Anzahl der verschiedenen einpolymerisierten Monomere,
$W_n$ = Gewichtsanteil des n-ten Monomers
$T_{Gn}$ = Glasübergangstemperatur des Homopolymers aus dem n-ten Monomer

näherungsweise berechnet werden.

Als Komponente (b) kann im Prinzip jeder von (a) verschiedene aliphatische oder cycloaliphatische Ester der Acrylsäure oder Methacrylsäure mit mindestens 4 C-Atomen im Alkoholrest oder ein Gemisch aus solchen Monomeren eingesetzt werden. Als Beispiele werden genannt: aliphatische Ester der Acryl- und Methacrylsäure mit 4 bis 20 C-Atomen im Alkoholrest, wie z.B. n-Butyl-, iso-Butyl-, tert.-Butyl, 2-Ethylhexyl-, Stearyl- und Laurylacrylat und -methacrylat sowie cycloaliphatische Ester der Acryl- und Methacrylsäure wie z. B. Cyclohexylacrylat und Cyclohexylmethacrylat. Die Zusammensetzung der Komponente (b) wird vorzugsweise so ausgewählt, daß bei alleiniger Polymerisation der Komponente (b) ein Polyacrylatharz mit einer Glasübergangstemperatur von 10 bis 100, vorzugsweise 20 bis 60°C erhalten wird.

Als Komponente (c) kann im Prinzip jede ethylenisch ungesättigte Carbonsäure oder eine Mischung aus ethylenisch ungesättigten Carbonsäuren eingesetzt werden. Als Komponente (c) werden vorzugsweise Acrylsäure und/oder Methacrylsäure eingesetzt.

Als Komponente (d) kann im Prinzip jedes von (a), (b) und (c) verschiedene ethylenisch ungesättigte Monomer oder ein Gemisch aus solchen Monomeren eingesetzt werden. Als Beispiele für Monomere, die als Komponente (d) eingesetzt werden können, werden genannt: vinylaromatische Kohlenwasserstoffe, wie Styrol, alpha-Alkylstyrol und Vinyltoluol, Amide der Acrylsäure und Methacrylsäure, wie z.B. Methacrylamid und Acrylamid, Nitrile der Methacrylsäure und Acrylsäure; Vinylether und Vinylester oder Polysiloxanmakromonomere, wie sie in den Patentschriften DE-A-38 07 571, DE-A-37 06 095, EP-B-0 358 153, US-A 4,754,014, DE-A 44 21 823 oder WO 92/22615 beschrieben werden. Als Komponente (d) werden vorzugsweise vinylaromatische Kohlenwasserstoffe, insbesondere Styrol eingesetzt. Die Zusammensetzung der Komponente (d) wird vorzugsweise so ausgewählt, daß bei alleiniger Polymerisation der Komponente (d) ein Harz mit einer Glasübergangstemperatur von 70 bis 120, vorzugsweise 80 bis 100°C erhalten wird.

Vorteilhafterweise sind die Bindemittel in dem Beschichtungsstoff in einer Menge von 10 bis 90 Gew.-%, besonders bevorzugt 15 bis 80 Gew.-% und insbesondere 20 bis 70 Gew.-%, jeweils bezogen auf den Gesamtfeststoffgehalt des Beschichtungsstoffs, enthalten.

Handelt es sich bei dem Beschichtungsstoff um ein Mehrkomponentensystem, werden Polyisocyanate und/oder Polyepoxide, insbesondere aber Polyisocyanate als Vernetzungsmittel verwendet.

Beispiele geeigneter Polyisocyanate sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und insbesondere 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Polyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind auch die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis (isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Weiterer Beispiele geeigneter Polyisocyanate sind die vorstehend bei der Herstellung der Thixotropierungsmittel beschriebenen.

Beispiele für geeignete Polyepoxide sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Im Falle der Einkomponentensysteme werden Vernetzungsmittel verwendet, welche bei höheren Temperaturen mit den funktionellen Gruppen der Bindemittel reagieren, um ein dreidimensionales Netzwerk aufzubauen. Selbstverständlich können solche Vernetzungsmittel in untergeordneten Mengen in den Mehrkomponentensystemen mit verwendet werden. Im Rahmen der vorliegenden Erfindung bedeutet "untergeordnete Menge" einen Anteil, welcher die hauptsächliche Vernetzungsreaktion nicht stört oder gar ganz verhindert.

Beispiele geeigneter Vernetzungsmittel dieser Art sind blockierte Polyisocyanate. Beispiele geeigneter Polyisocyanate sind die vorstehend beschriebenen.

Beispiele für geeignete Blockierungsmittel sind die aus der US-Patentschrift US-A-4,444,954 bekannten Blokkierungsmittel wie

i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4.-hydroxytoluol;

ii) Lactame, wie ε-Caprolactam, δ-Valerolactam, γ-Butyrolactam oder β-Propiolactam;

iii) aktive methylenische Verbindungen, wie Diethylmalonat, Dimethylmalonat, Acetessigsäureethyl- oder -methylester oder Acetylaceton;

iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;

v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;

vi) Säureamide wie Acetoanilid, Acetoanisidinamid, Acrylamid, Methacrylamid, Essigsäureamid, Stearinsäureamid oder Benzamid;

vii) Imide wie Succinimid, Phthalimid oder Maleinimid;

viii) Amine wie Diphenylamin, Phenylnaphthylamin, Xylidin, N-Phenylxylidin, Carbazol, Anilin, Naphthylamin, Butylamin, Dibutylamin oder Butylphenylamin;

ix) Imidazole wie Imidazol oder 2-Ethylimidazol;

x) Harnstoffe wie Harnstoff, Thioharnstoff, Ethylenharnstoff, Ethylenthioharnstoff oder 1,3-Diphenylharnstoff;

xi) Carbamate wie N-Phenylcarbamidsäurephenylester oder 2-Oxazolidon;

xii) Imine wie Ethylenimin;

xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;

xiv) Salze der schwefeligen Säure wie Natriumbisulfit oder Kaliumbisulfit;

xv) Hydroxamsäureester wie Benzylmethacrylohydroxamat (BMH) oder Allylmethacrylohydroxamat; oder

xvi) substituierte Pyrazole, Ketoxime, Imidazole oder Triazole; sowie

Gemische dieser Blockierungsmittel, insbesondere Dimethylpyrazol und Triazole, Malonester und Acetessigsäureester oder Dimethylpyrazol und Succinimid.

Als Vernetzungsmittel können auch Tris(alkoxycarbonylamino)triazine der allgemeinen Formel

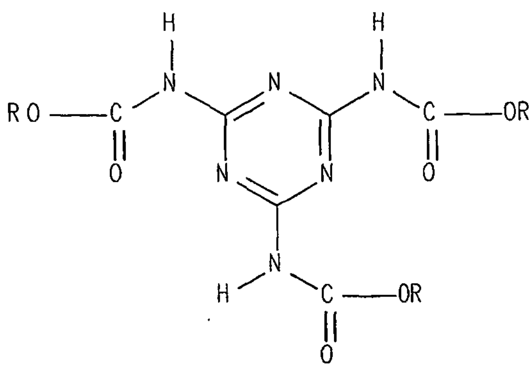

eingesetzt werden.

Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/oder Tris (2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vernetzungsmittel sind beta-Hydroxyalkylamide wie N,N,N',N'-Tetrakis(2-hydroxyethyl)adipamid oder N,N,N',N'-Tetrakis(2-hydroxy-propyl)adipamid.

Weitere Beispiele geeigneter Vernetzungsmittel sind Siloxane, insbesondere Siloxane mit mindestens einer Trialkoxy- oder Dialkoxysilangruppe.

Weitere Beispiele geeigneter Vernetzungsmittel sind Polyanhydride, insbsondere Polysuccinsäureanhydrid.

Die Menge der Vernetzungsmittel in dem Beschichtungsstoff kann breit variieren und richtet sich insbesondere zum einen nach der Funktionalität der Vernetzungsmittel und zum anderen nach der Anzahl der im Bindemittel vorhandenen vernetzenden funktionellen Gruppen sowie nach der Vernetzungsdichte, die man erzielen will. Der Fachmann

kann daher die Menge der Vernetzungsmittel aufgrund seines allgemeinen Fachwissens, gegebenenfalls unter Zuhilfenahme einfacher orientierender Versuche ermitteln. Vorteilhafterweise ist das Vernetzungsmittel in dem Beschichtungsstoff in einer Menge von fünf bis 60 Gew.-%, besonders bevorzugt 10 bis 50 Gew.-% und insbesondere 15 bis 45 Gew.-%, jeweils bezogen auf den Gesamtfeststoffgehalt des Beschichtungsstoffs, enthalten. Hierbei empfiehlt es sich des weiteren, die Mengen an Vernetzungsmittel und Bindemittel so zu wählen, daß in dem Beschichtungsstoff das Verhältnis von funktionellen Gruppen im Vernetzungsmittel und funktionellen Gruppen im Bindemittel zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Bevorzugt ist es, daß der Beschichtungsstoff ein nichtwäßriger Beschichtungsstoff, vorzugsweise ein nichtwäßriger, transparenter Glanzklarlack, ist. Der Ausdruck Glanzklarlack meint, daß ein möglichst hoher Glanz angestrebt ist, im Gegensatz zu den Mattlacken.

Im Falle von nichtwäßrigen Beschichtungsstoffen enthalten diese 20 bis 70 Gew.-%, vorzugsweise 40 bis 60 Gew.-%, (bezogen auf den applikationsfertige Beschichtungsstoff) organische Lösungsmittel, wie z.B. aliphatische, aromatische und/oder cycloaliphatische Kohlenwasserstoffe, Alkylester der Essigsäure oder Propionsäure, Alkanole, Ketone, Glykolether und/oder Glykoletherester.

Darüber hinaus kann der Beschichtungsstoff mindestens ein übliches und bekanntes Lackadditiv in wirksamen Mengen, d.h. in Mengen vorzugsweise bis zu 40 Gew.-%, besonders bevorzugt bis zu 30 Gew.-% und insbesondere bis zu 20 Gew.-%, jeweils bezogen auf den Gesamtfeststoffgehalt des Beschichtungsstoffs, enthalten. Wesentlich ist, daß die Lackadditive die Transparenz und Klarheit des Beschichtungsstoffs nicht negativ beeinflussen.

Beispiele geeigneter Lackadditive sind

- UV-Absorber;
- Lichtschutzmittel wie HALS-Verbindungen, Benztriazole oder Oxalanilide;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Reaktiwerdünner, wie sie aus dem Stand der Technik allgemein bekannt sind;

Beispiele besonders geeigneter thermisch härtbarer Reaktiwerdünner sind stellungsisomere Diethyloctandiole oder Hydroxylgruppen enthaltende hyperverzweigte Verbindungen oder Dendrimere, wie sie in den Patentanmeldungen DE 198 09 643 A1, DE 198 40 605 A1 oder DE 198 05 421 A1 beschrieben werden.

Beispiele besonders geeigneter mit aktinischer Strahlung härtbarer Reaktiwerdünner werden in Römpp Lexikon Lacke und Druckfarben, Georg Thieme Verlag, Stuttgart, New York, 1998, auf Seite 491 unter dem Stichwort »Reaktivverdünner« beschrieben.

- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- weitere transparente Füllstoffe wie Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Rheologiesteuernder Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127

offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly (meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;

- Flammschutzmittel und/oder

- Mattierungsmittel.

Weitere Beispiele geeigneter Lackadditive (a6) werden in dem Lehrbuch »Lackadditive« von Johan Bieleman, Wiley-VCH, Weinheim, New York, 1998, beschrieben.

Hierbei kann das Vernetzungsmittel oder die Mischung von Vernetzungsmitteln gleichzeitig oder erst unmittelbar vor einer Applikation des Beschichtungsstoffs zugegeben werden. Im Falle von Zweikomponentensystemen wird das Vernetzungsmittel, beispielsweise unblockierte Polyisocyanate, erst ummittelbar vor der Applikation des Beschichtungsstoffs zugegeben. Im Falle von Einkomponentensystemen kann das Vernetzungsmittel, beispielsweise blockierte Polyioccyanate, bereits herstellerseitig zugegeben sein.

Die Herstellung der erfindungsgemäß verwendeten Beschichtungsstoffe erfordert keine methodischen Besonderheiten, sondern erfolgt nach den üblichen und bekannten Methoden der Herstellung von Beschichtungsstoffen durch Vermischen ihrer Bestandteile und Homogenisieren der resultierenden Mischungen In geeigneten Mischaggregaten wie Rührkessel, Dissolver, Ultraturrax, In-line-Dissolver, Rührwerksmühlen, Perimühlen oder Extruder.

Dabei werden die erfindungsgemäß zu verwendenden Nanopartikel (A) und (B) sowie gegebenenfalls die Pigmente vorzugsweise In Form von Pasten mit den übrigen Bestandteilen vermischt.

Die Anreibung mit Bindemitteln kann dabei ggf. in Gegenwart von Dispergiermitteln erfolgen.

Ais Reibharz eignen sich im Prinzip alle Stoffe, die auch für die Bindemittel oben schon ausgeführt wurden. Bevorzugt werden als Reibharze Polyester und/oder Polyacrylate eingesetzt; Insbesondere hydroxylgruppenhaltige Polyacrylate.

Die erfindungsgemäß verwendeten Beschichtungsstoffe können auch zur Herstellung von Follen, Formtellen, insbesondere optischen Formteilen, dienen.

Als Substrate kommen alle zu lackierenden Oberflächen, die durch eine Härtung der hierauf befindlichen Lackierungen unter Anwendung von Hitze oder Hitze und aktinischer Strahlung nicht geschädigt werden, In Betracht. Geeignete Substrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zamentplatten oder Dachziegel, sowie Verbunden dieser Materiallen. Die Oberflächen dieser Materiallen können bereits vorlackiert oder vorbeschichtet sein.

Demgemäß sind die erfindungsgemäß verwendeten Beschichtungsstoffe für das Lackieren oder Beschichten von Kraftfahrzeugkarosserien und Teilen hiervon, Kraftfahrzeugen Im innen- und Außenbereich, aber auch Bauwerken im Innen- und Außenbereich, Türen, Fenstern und Möbeln sowie im Rahmen der industriellen Lackierung für das Lakkieren von Kunststofftellen, insbesondere transparenten Kunststofftellen, Kleintellen, Colis, Container, Emballagen, elektrotechnischen Bauteilen und weißer Ware sowie für das Beschichten von Hohlglasartikeln besonders gut geeignet. Insbesondere sind die erfindungsgemäß verwendeten Beschichtungsstoffe für die Verwendung auf dem Automobilsektor geeignet.

im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäß verwendeten Beschichtung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends oder die mit diesen Kunststoffen hergestellten faserverstärkten Kompositmaterlallen lackiert werden.

Im Falle von nicht funktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundlerung versehen werden.

Besondere Vorteile zeigen die erfindungsgemäß verwendeten Beschichtungsstoffe und die erfindungsgemäß verwendeten Beschichtungen in der Automobilserien- und Reparaturlacklerung als klare und transparente, hochkratzfeste, hochglänzende flexible, säure- und wasserbeständige, fest haftende, steinschlagfeste Klarlackierungen im Rahmen farb- und/oder effektgebender Mehrschichtlackierungen.

Die nach der erfindungsgemäßen verwendung erhaltenen Mehrschichtisckierungen können in unterschledlicher Weise hergestellt werden. Bevorzugt werden die in der deutschen Patentanmeldung DE 199 30 664 A1, Seite 15, Zeile 36 bis 58, beschriebenen. Naß-in-naß-Verfahren eingesetzt.

Da die aus den erfindungsgemäß verwendeten Beschichtungsstoffen hergestellten Beschichtungen auch auf bereits ausgehärteten Elektrotauchlackierungen, Füllerlackierungen, Basislackierungen oder üblichen und bekannten Klarlacklerungen hervorragend heften, eignen sie sich ausgezeichnet für die Autoreparaturlackierung oder die Kratzfestausrüstung von exponierten Stellen von lackierten Automobilkarosserien.

Die Applikation der erfindungsgemäß verwendeten Beschichtungsstoffe kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, Insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Helßspritzen.

Die Aushärtung der applizierten erfindungsgemäß verwendeten Beschichtungsstoffe kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandtellen wie Lösemittel. Die Ruhezeit kann durch die Anwendung erhöhter Temperaturen bis 90°C und/oder durch eine reduzierte Luftfeuchte <10g Wasser/kg Luft, insbesondere <5g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Besonders bevorzugt wird ein Verfahren angewandt, bei welcher der Bestandteil Wasser rasch aus den Naßschichten entfernt wird. Geeignete Verfahren dieser Art werden beispielsweise von Roger Talbert in Industrial Paint & Powder, 04/01, Seiten 30 bis 33, »Curing in Seconds with NIR«, oder in Galvanotechnik, Band 90 (11), Seiten 3098 bis 3100, »Lackiertechnik, NIR-Trocknung im Sekundentakt von Flüssig- und Pulverlacken«, beschrieben.

Vorteilhafterweise erfolgt die thermische Härtung bei einer Temperatur von 50 bis 200°C, besonders bevorzugt 60 bis 190°C und insbesondere 80 bis 180°C während einer Zeit von 1 min bis zu 2 h, besonders bevorzugt 2 min bis zu 1 h und insbesondere 3 min bis 45 min.

Weiterhin wird die Härtung mit aktinischer Strahlung mit UV-Strahlung und/oder Elektronenstrahlen durchgeführt. Vorzugsweise wird hierbei eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 $mJ/cm^2$ angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschichten gewährleistet werden. Auch im Falle der Härtung mit UV-Strahlung kann, um die Bildung von Ozon zu vermeiden, unter Inertgas oder einer sauerstoffabgereicherten Atmosphäre gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen. Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kingdom 1984, beschrieben. Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, beschrieben.

Bei kompliziert geformten Werkstücken, wie sie für Automobilkarosserien vorgesehen sind, können die nicht direkter Strahlung zugänglichen Bereiche (Schattenbereiche) wie Hohlräume, Falzen und andere konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Hierbei kann die Aushärtung stufenweise erfolgen, d.h. durch mehrfache Belichtung oder Bestrahlung mit aktinischer Strahlung. Dies kann auch alternierend erfolgen, d.h., daß abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu

beginnen und hiermit zu enden.

Die nach der erfindungsgemäßen Verwendung erhaltenen Mehrschichtlackierungen weisen ein hervorragendes Eigenschaftsprofil auf, das hinsichtlich der Mechanik, Optik, Korrosionsbeständigkeit und Haftung sehr gut ausgewogen ist. So welsen die Mehrschichtlackierungen die vom Markt geforderte hohe optische Qualität und Zwischenschichthaftung auf und werfen keine Probleme wie mangelnde Schwitzwasserbeständlgkeit, Rißbildung (mudcracking) oder Verlaufestörungen oder Oberflächenstrukturen In den erfindungsgemäßen Klarlackierungen auf.

Im Falle von nicht-wäßrigen Beschichtungsstoffen können diese z.B. 20 bis 70 Gew.-%, vorzugsweise 40 bis 60 Gew.-% (bezogen auf den applikationsfertigen Beschichtungsstoff) organische Lösungsmittel, wie z.B. aliphatische, aromatische und/oder cycloaliphatische Kohlenwasserstoffe, Alkylester der Essigsäure oder Propionsäure, Alkanole, Ketone, Glykolether und/oder Glykoletherester enthalten.

Insbesondere weisen die nach der erfindungsgemäßen Verwendung erhaltenen Mehrschichtlackierungen einen hervorragenden Metallic-Effekt, einen hervorragenden D.O.I. (distinctiveness of the reflected image), eine ganz besonders hohe Kratzfestigkeit und eine hervorragende Oberflächenglätte auf.

Demzufolge weisen die erfindungsgemäßen grundierten oder ungrundierten Substrate, die mit mindestens einer erfindungsgemäßen Beschichtung beschichtet sind, bei einem besondere vorteilhaften anwendungstechnischen Eigenschaftsprofil eine besonders lange Gebrauchsdauer auf, was sie wirtschaftlich, ästhetisch und technisch besonders wertvoll macht.

**Beispiele und Vergleichsversuche**

**Die Herstellung eines Polyacrylats 1 (Bindemittel)**

In einem Laborreaktor mit einem Nutzvolumen von 4 l ausgestattet mit einem Rührer, zwei Tropftrichtern für die Monomermischung resp. Initiatorlösung, Stickstoffeinleitungsrohr, Thermometer und Rückflußkühler wurden 897 g einer Fraktion aromatischer Kohlenwasserstoffe mit einem Siedebereich von 158 - 172°C eingewogen. Das Lösemittel wurde auf 140°C aufgeheizt. Nach Erreichen von 140°C wurden eine Monomermischung aus 487 g t-Butylacrylat, 215 g n-Butylmethacrylat, 143 g Styrol, 572 g Hydroxypropylmethacrylat und 14 g Acrylsäure innerhalb von 4 h, und eine Initiatorlösung von 86g t-Butylperethylhexanoat in 86 g des beschriebenen aromatischen Lösemittels innerhalb von 4,5 Stunden gleichmäßig in den Reaktor dosiert. Mit der Dosierung der Monomermischung und der Initiatorlösung wurde gleichzeitig begonnen. Nach Beendigung der Initiatordosierung wurde die Reaktionsmischung 2 h bei 140°C gehalten und danach abgekühlt. Die resultierende mit einer Mischung aus 1-Methoxipropylacetat-2, Butylglykolacetat und Butylacetat verdünnte Polymerlösung hatte einen Feststoffgehalt von 53%, bestimmt in einem Umluftofen 1 h bei 130°C, eine Säurezahl von 10, eine OH-Zahl von 156 und eine Viskosität von 23 dPas (gemessen an einer 60%igen Anlösung der Polymerlösung in dem beschriebenen aromatischen Lösemittel, unter Verwendung eines ICI Platte-Kegel Viskosimeters bei 23°C).

**Die Herstellung eines Polyacrylats 2 (Bindemittel)**

In einem geeigneten Reaktor, ausgerüstet mit einem Rührer, zwei Tropftrichtern für die Monomermischung und die Initiatorlösung, Stickstoffeinleitungsrohr, Thermometer, Heizung und Rückflußkühler, wurden 650 Gewichtsteile einer Fraktion aromatischer Kohlenwasserstoffe mit einem Siedebereich von 158 bis 172°C eingewogen. Das Lösemittel wurde auf 140°C erhitzt. Hiernach wurden eine Monomermischung aus 652 Gewichtsteilen Ethylhexylacrylat, 383 Gewichtsteilen 2-Hydroxyethylmethacrylat, 143 Gewichtsteilen Styrol, 212 Gewichtsteilen 4-Hydroxybutylacrylat und 21 Gewichtsteilen Acrylsäure innerhalb von 4 Stunden und eine Initiatorlösung aus 113 Gewichtsteilen des aromatischen Lösemittels und 113 Gewichtsteilen tert.-Butylperethylhexanoat innerhalb von 4,5 Stunden gleichmäßig in die Vorlage zudosiert. Mit der Dosierung der Monomermischung und der Initiatorlösung wurde gleichzeitig begonnen. Nach Beendigung des Initiatorzulaufs wurde die resultierende Reaktionsmischung während weiterer 2 Stunden auf 140°C unter Rühren erhitzt und anschließend abgekühlt. Die resultierende Lösung des Methacrylatcopolymerisats wurde mit einem Gemisch aus 1-Methoxypropylacetat-2, Butylglykolacetat und Butylacetat verdünnt.

Die resultierende Lösung wies einen Feststoffgehalt von 65%, bestimmt in einem Umluftofen (1 h/130°C), eine Säurezahl von 15 mg KOH/g Festkörper, eine OH-Zahl von 175 mg KOH/g Festkörper und eine Glasübergangstemperatur von -21 °C auf.

**Die Herstellung eines Polyacrylats 3 (Bindemittel)**

In einem Laborreaktor mit einem Nutzvolumen von 4 l ausgestattet mit einem Rührer, zwei Tropftrichtern für die Monomermischung resp. Initiatorlösung, Stickstoffeinleitungsrohr, Thermometer und Rückflußkühler wurden 720 g einer Fraktion aromatischer Kohlenwasserstoffe mit einem Siedebereich von 158 - 172°C eingewogen. Das Lösemittel

wurde auf 140°C aufgeheizt. Nach Erreichen von 140°C werden eine Monomermischung aus 212 g n-Butylmethacrylat, 367 g Cyclohexanmethacrylat, 282 g Styrol, 254 g Hydroxyethylmethacrylat, 282 g Hydroxypropylmethacrylat und 14 g Acrylsäure innerhalb von 4 h, und eine Initiatorlösung von 141 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatorlösung wird gleichzeitig begonnen. Nach Beendigung der Initiatordosierung wird die Reaktionsmischung 2 weitere Stunden auf 140°C gehalten und danach abgekühlt. Die resultierende Polymerlösung hat einen Feststoffgehalt von 60%, bestimmt in einem Umluftofen 1 h bei 130°C, eine Säurezahl von 10, eine OH-Zahl von 155 und eine Viskosität von 18.5 dPas (gemessen an einer 55%igen Anlösung der Polymerlösung in dem beschriebenen aromatischen Lösemittel, unter Verwendung eines ICI Platte-Kegel Viskosimeters bei 23°C).

**Die Herstellung einer Paste von hydrophoben Nanopartikeln (A)**

In einer Labor-Rührwerksmühle der Firma Vollrath wurden 800 g Mahlgut, bestehend aus 592 g des Polyacrylats 1, 80 g Butylacetat, 64 g Xylol und 64 g Aerosil® 972 (Degussa AG, Hanau, Oberfläche nach BET = 110±20 $m^2$/g), zusammen mit 1100 g Quarzsand (Korngröße 0.7 - 1 mm) eingewogen und unter Wasserkühlung 30 min angerieben. Anschließend wurde von den Mahlkörpern abgetrennt.

**Die Herstellung einer Paste von hydrophiler Nanopartikeln (B)**

In einer Labor-Rührwerksmühle der Firma Vollrath werden 800 g Mahlgut, bestehend aus 600 g des Polyacrylats 3, 130,4 g Butylacetat und 69,6 g Aerosil® R 380 (Degussa AG, Hanau - Oberfläche nach BET = 380±30 $m^2$/g), zusammen mit 1100 g Quarzsand (Korngröße 0.7 - 1 mm) eingewogen und unter Wasserkühlung 30 min angerieben. Anschließend wurde von den Mahlkörpern abgetrennt.

**Beispiel 1 und Verglelchsverauche V'1 und V 2**

Die Herstellung eines Zweikomponentenklarlacks (Beispiel 1) und Vergleichs-Zweikomponentenklarlacke (Vergleichsversuche V 1 und V 2)

Ein Zweikomponentenklarlack (Beispiel 1) und zwei herkömmliche Zweikomponentenklarlarlacke (Vergleichsversuche V 1 und V 2) wurden aus den In der Tabelle 1 aufgeführten Bestandteilen durch Vermischen und Homogenisieren hergestellt und auf Prüftsfein appliziert.

Tabelle 3: Zusammensetzung des Zweikomponentenklarlacks (Beispiel 1) und der herkömmlichen Zweikomponentenklarlacke (Verglelchaversuche V 1 und V zwei)

| Bestandtelle gleichsvers. Telle) | Beispiel 1 (Gew.-Telle) | Ver-(Gew.- | |
|---|---|---|---|
| Stammlack | | V1 | V2 |
| Polyacrylat 2 | 35,0 | 35,0 | 35,0 |
| Polyacrylat 3 | 18,0 | 14,0 | 23,0 |
| Setalux® 81198 (Akzo Nobel Resins, Bergen op Zoom) | 10,0 | 10,0 | 10,0 |
| Disperbyk 161 (Byk Chemie, Wesel) | 1,0 | 1,0 | 1,0 |
| Nanopartikel | | | |
| Nanopartikelpaste (A) | 8,3 | - | 8,3 |
| Nanopartikelpaste (B) | 9,7 | 20,0 | - |
| Substit. Hydroxyphenylbenztriazo l (95%-ig in Xylol) | 1,2 | 1,2 | 1,2 |
| Aminoethermodifizierter 2,2,6,6-Tetramethyl-piperydinylester | 1,0 | 1,0 | 1,0 |
| Byk® 390 (Byk Chemie) | 0,2 | 0,2 | 0,2 |
| Byk® 325 (Byk Chemie) | 0,2 | 0,2 | 0,2 |
| Byk® ES80 | 0,2 | 0,2 | 0,2 |

(fortgesetzt)

| Bestandtelle gleichsvers. Telle) | Beispiel 1 (Gew.-Telle) | Ver-(Gew.- | |
|---|---|---|---|
| Stammlack | | V1 | V2 |
| Butanol | 1,5 | 1,5 | 1,5 |
| Butyldiglykolacetat | 5,0 | 5,0 | 5,0 |
| Butylacetat | 3,7 | 5,7 | 8,4 |
| Ethoxypropylacetat | 5,0 | 5,0 | 5,0 |
| | 100 | 100 | 100 |

Setalux® 81198 ist ein Harnstoffderivat in einem, Bindemittel gelöst bzw. dispergiert.

**Vernetzer** 33 33 33

Anlösung eines Polyisocyanats auf der Basis
Hexamethylendiisocyanat (80%-ige Anlsg. von
Desmodur N 3390 von Bayer AG in Butylacetat/Solventn.)

Die Mengenangaben sind jeweils bezogen auf den Festkörpergehalt.

Zur Herstellung der Prüftafeln wurden nacheinander ein Elektrotauchlack mit einer Schichtdicke von 18 - 22 μm und ein Wasserfüller mit einer Schichtdicke von 35 - 40 μm appliziert und eingebrannt. Hierbei wurden der Elektrotauchlack während 20 min bei 170°C und der Füller während 20 min bei 160°C eingebrannt. Anschließend wurde ein schwarzer Wasserbasislack mit einer Schichtdicke von 12 - 15 μm aufgetragen und 10 min bei 80°C abgelüftet. Abschließend wurden die Klarlacke in einem Einmalauftrag elektrostatisch vertikal appliziert (Glockentyp: Ecobell), wonach der Basislack und die Klarlacke während 20 Minuten bei 140°C gehärtet wurden (Naß-in-naß-Verfahren). Es resultierten Klarlackierungen einer Schichtdicke von 55 μm.

**Beschreibung des Rotahub-Test zur Ermittlung der Kratzfestigkeit**

Die Verkratzung der Prüftafel wird durch eine zweidimensionale Bewegung und zusätzlicher Rotation des Prüfkörpers erzeugt.

Die Prüftafeln haben eine Größe von 500 x 200 mm, entsprechend des Probenaufnahmetisches.

Beliebig läßt sich der Fahrweg über die Koordinaten der x- und y-Achse anwählen, bei einer Vorschubgeschwindigkeit der x-Achse von bis zu 70 mm/sec. und 20 mm/sec auf der y-Achse.

Die Prüfbedingungen sind veränderbar durch einen frei wählbaren Werkstücknullpunkt und eine in Geschwindigkeit und Zyklenanzahl einstellbare Vorschubbewegung des Prüfkörpers.

Zudem ist die Rotationsgeschwindigkeit der Scheibe bis zu 500 U/min. stufenlos wählbar und der Anpressdruck des Prüfkörpers über die Gewichtskraft des jeweils verwendeten Bürstentopfes veränderbar.

Eine Heizplatte, die als Probenaufnahmetisch dient kann über ein externes Temperiergerät bis 80°C beheizt werden.

Als Aufnahme für den Prüfkörper dient eine kreisförmige Kunststoffscheibe, der sogenannte Bürstentopf, mit einem Durchmesser von 70 mm. Durch sein Eigengewicht selbst stellt der Bürstentopf einen der Versuchsparameter dar.

Der Prüfkörper (das Reibmaterial) wird mit der Schaumstoffseite über einen Klettverschluß auf dem Bürstentopf befestigt.

Der Prüfkörper besteht aus Papier der Qualität AGFA 701 und verursacht durch den Anteil an abrasiven Inhaltsstoffen das Schadensbild.

Der Prüfkörper ist aufgebaut aus einer 4 mm starken Moltopren-Schaum-Platte, auf die Papier der Sorte AGFA 701 mit doppelseitigem Klebeband fixiert ist.

Als Prüfkörper wird ein Kreisring mit den Maßen 70 x 40 mm verwendet. Somit ist die Kreisfläche der Mitte, mit einem Durchmesser von 30 mm herausgeschnitten.

Parameter der Rotahubprüfung für den erfindungsgemäßen Klarlack und den Vergleichslack. Gewicht der kompletten Prüfscheibe 304.8 g, Geschwindigkeit in x-Richtung 45.3 mm/s, Geschwindigkeit in y-Richtung 20 mm/s, Rotation der Prüfscheibe 2.4 Umdrehung/s, Meßtemperatur 23.0°C, Rel. Luftfeuchtigkeit 53 %. Der y-Versatz der mäandrischen Bewegung über das Prüfblech betrug 3.67 mm. Die Mäanderzahl betrug 26 (=26 mal x- + y-Weg).

Gemessen wurde nach der Verkratzung der DIN-Restglanz 20° zur Beurteilung der Schädigung.

Lacktechnische Ergebnisse

Die Prüfbleche mit den Klarlacken auf schwarzem Wasserbasislack wurden mittels des vorher beschriebenen Rotahubtests geprüft.

Dabei wies der Klarlack des Vergleichsversuchs 1 mit den hydrophilen Partikeln einen Glanzverlust von 20.3 Einheiten (DIN 20° Geometrie), der des Vergleichsversuchs 2 mit den hydrophoben Partikeln von 5.2 Einheiten und der erfindungsgemäße Klarlack einen Glanzverlust von 8.2 Einheiten auf.

Der Klarlack des Vergleichsversuchs 2 wies mangelnde Transparenz auf, insbesondere bei Schichtdicken über 50 µm, wie sie In der Praxis gefordert werden. Sowohl der Klarlack des Vergleichsversuchs 1, als auch der Klarlack entsprechend der erfindungsgemäßen Verwendung zeigten auch bei hohen Schichtdicken über 50 µm bis 60 µm ausgszeichnete Transparenz.

Die Tabelle beschreibt die Verlaufseigenschaften der Klarlacke.

Tabelle 2: Verlaufselgsnschaften und DOI des Klarlacke des Beispiels 1 und der herkömmlichen Klarlacke der Vergleichsversuche V 1 und V 2

| | Beispiel 1 | Vergleichsversuche | |
|---|---|---|---|
| | | V1 | V2 |
| | | hydrophil 380 | hydrophob 972 |
| Verlauf (visuell) | glatte Oberfi. (flache Narbe) | glatte Oberfl. (flache Narbe) | welligere Oberfl. (ausgeprägte Narbe) |
| Verlauf (meßtechn.) Wavescan a): | | | |
| longwave waagrecht | 8,9 | 6,1 | 10,1 |
| shortwave waagrecht | 26,6 | 24,6 | 29,5 |
| longwave senkrecht | 10,1 | 9,1 | 12,2 |
| shortwave senkrecht | 24,0 | 23,0 | 28,0 |
| DOI | 91 | 96 | 82 |

a) Meßgerät: Fa. Byk/Gardner - Wave scan plus

Die Ergebnisse untermauern, daß nur der Klarlack des Beispiels 1 mit der erfindungsgemäß zu verwendenden Kombination von hydrophilen und hydrophoben Nanopartikeln von Oberflächenstrukturen freie, glatte, brillante, klare und kratzfeste Klarlackierungen mit einem sehr guten Verlauf lieferte.

## Patentansprüche

**1.** Verwendung eines physikalisch, thermisch, mit aktinischer Strahlung oder thermisch und mit aktinischer Strahlung härtbaren Beschichtungsstoffes als klare und transparente Klarlacklerung im Rahmen farb- und/oder effektgebender Mehrschlchtlacklerungen In der Automobiliackierung, wobei der Beschichtungsstoff

(A) mindestens eine Art von hydrohoben Nanopartikeln auf der Basis von Siliziumdioxid und
(B) mindestens eine Art von hydrophilen Nanopartikeln auf der Basis von Siliziumdioxid mit einer Inneren Oberfläche nach BET > 300 $m^2/g$ enthält,

und wobei das Gewlchtsverhältnls zwischen hydrophilen und hydrophoben Nanopartikeln 4:1 bis 1:4 beträgt.

**2.** Verwendung nach Anspruch 1, **dadurch gekennzeichnet, daß** die hydrophilen Nanoparikel (B) eine innere Oberfläche nach BET >340 $m^2/g$ haben.

**3.** Verwendung nach Anspruch 1, **dadurch gekennzeichnet, daß** das Gewlchtsverhältnis (A) : (B) bei 3 : 7 bis 7 : 3 liegt.

**4.** Verwendung nach Anspruch 3, **dadurch gekennzeichnet, daß** das Gewichtsverhältnls (A) : (B) bei 2 : 3 bis 3 : 2 liegt.

**5.** Verwendung nach einem der Ansprüche 1 bis 4, **dadurch gekennzeichnet, daß** die Prlmärteilchergröße der Nanopartikel (A) und (B) <35nm ist.

**6.** Verwendung nach Anspruch 5, **dadurch gekennzeichnet, daß** die Primärteilchengröße <20 nm ist.

**7.** Verwendung nach Anspruch 6, **dadurch gekennzeichnet, daß** die Primärteilchengröße <10 nm ist.

**8.** Verwendung nach einem der Ansprüche 1 bis 7, **dadurch gekennzeichnet, daß** die hydrophoben Nanopartikel (A) durch die Oberflächenmodlflzlerung von pyrogenem Siliziumdioxid herstellbar sind.

**9.** Verwendung nach einem der Ansprüche 1 bis 8, **dadurch gekennzeichnet, daß** die hydrophilen Nanopartikel (B) aus pyrogenem Siliziumdioxid bestehen.

**10.** Verwendung nach einem der Ansprüche 1 bis 9, **dadurch gekennzeichnet, daß** er die Nanopartikel (A) und (B) in einer Menge von 0,3 bis 6 Gew.-%, bezogen auf die Gesamtmenge, enthält.

**11.** Verwendung nach Anspruch 10, **dadurch gekennzeichnet, daß** er die Nanopartikel (A) und (B) in einer Menge von 0,8 bis 3 Gew.-%, bezogen auf die Gesamtmenge, enthält.

**12.** Verwendung nach Anspruch 11, **dadurch gekennzeichnet, daß** er die Nanopartikel (A) und (B) in einer Menge von 1 bis 2,4 Gew.-%, bezogen auf die Gesamtmenge, enthält.

## Claims

**1.** Use of a coating material which is curable physically, thermally, with actinic radiation, or both thermally and with actinic radiation, as a clear and transparent clearcoat as part of multicoat color and/or effect paint systems in automobile finishing, the coating material comprising

(A) at least one kind of hydrophobic nanoparticles based on silica and
(B) at least one kind of hydrophilic nanoparticles based on silica having a BET internal surface area of > 300 $m^2/g$,

and the weight ratio between hydrophilic and hydrophobic nanoparticles being from 4:1 to 1:4.

**2.** Use according to Claim 1, **characterized in that** the hydrophilic nanoparticles (B) have a BET internal surface area of > 340 $m^2/g$.

**3.** Use according to Claim 1, **characterized in that** the (A):(B) weight ratio is from 3:7 to 7:3.

**4.** Use according to Claim 3, **characterized in that** the (A):(B) weight ratio is from 2:3 to 3:2.

**5.** Use according to any of Claims 1 to 4, **characterized in that** the primary particle size of the nanoparticles (A) and (B) is < 35 nm.

**6.** Use according to Claim 5, **characterized in that** the primary particle size is < 20 nm.

**7.** Use according to Claim 6, **characterized in that** the primary particle size is < 10 nm.

**8.** Use according to any of Claims 1 to 7, **characterized in that** the hydrophobic nanoparticles (A) are preparable by surface modification of pyrogenic silica.

**9.** Use according to any of Claims 1 to 8, **characterized in that** the hydrophilic nanoparticles (B) are composed of pyrogenic silica.

**10.** Use according to any of Claims 1 to 9, **characterized in that** the coating material comprises the nanoparticles (A) and (B) in an amount of from 0.3 to 6% by weight, based on the overall amount.

**11.** Use according to Claim 10, **characterized in that** the coating material comprises the nanoparticles (A) and (B) in

an amount of from 0.8 to 3% by weight, based on the overall amount.

12. Use according to Claim 11, **characterized in that** the coating material comprises the nanoparticles (A) and (B) in an amount of from 1 to 2.4% by weight, based on the overall amount.

**Revendications**

1. Utilisation d'une substance de revêtement durcissable par voie physique, thermique, avec un rayonnement actinique ou par voie thermique et avec un rayonnement actinique comme laquage clair et transparent dans le cadre de laquages à plusieurs couches conférant une couleur et/ou un effet dans le laquage automobile, où la substance de revêtement contient

   (A) au moins un type de nanoparticules hydrophobes à base de dioxyde de silicium et
   (B) au moins un type de nanoparticules hydrophiles à base de dioxyde de silicium présentant une surface interne selon BET > 300 $m^2$/g,

   et où le rapport pondéral entre les nanoparticules hydrophiles et hydrophobes est de 4:1 à 1:4.

2. Utilisation selon la revendication 1, **caractérisée en ce que** les nanoparticules hydrophiles (B) présentent une surface interne selon BET > 340 $m^2$/g.

3. Utilisation selon la revendication 1, **caractérisée en ce que** le rapport pondéral (A):(B) est de 3:7 à 7:3.

4. Utilisation selon la revendication 3, **caractérisée en ce que** le rapport pondéral (A):(B) est de 2:3 à 3:2.

5. Utilisation selon l'une quelconque des revendications 1 à 4, **caractérisée en ce que** la grosseur des particules primaires des nanoparticules (A) et (B) est < 35 nm.

6. Utilisation selon la revendication 5, **caractérisée en ce que** la grosseur des particules primaires est < 20 nm.

7. Utilisation selon la revendication 6, **caractérisée en ce que** la grosseur des particules primaires est < 10 nm.

8. Utilisation selon l'une quelconque des revendications 1 à 7, **caractérisée en ce que** les nanoparticules hydrophobes (A) peuvent être préparées par la modification de surface de dioxyde de silicium obtenu par voie pyrogène.

9. Utilisation selon l'une quelconque des revendications 1 à 8, **caractérisée en ce que** les nanoparticules hydrophiles (B) sont constituées par du dioxyde de silicium obtenu par voie pyrogène.

10. Utilisation selon l'une quelconque des revendications 1 à 9, **caractérisée en ce que** la substance de revêtement contient les nanoparticules (A) et (B) en une quantité de 0,3 à 6% en poids, par rapport à la quantité totale.

11. Utilisation selon la revendication 10, **caractérisée en ce que** la substance de revêtement contient les nanoparticules (A) et (B) en une quantité de 0,8 à 3% en poids, par rapport à la quantité totale.

12. Utilisation selon la revendication 11, **caractérisée en ce que** la substance de revêtement contient les nanoparticules (A) et (B) en une quantité de 1 à 2,4% en poids, par rapport à la quantité totale.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19924172 A1
- DE 10049628 A
- DE 19924171 A1
- US 5474811 A1
- US 5356669 A1
- US 5605965 A1
- WO 8410211 A
- WO 9410212 A
- WO 9410213 A
- EP 0594068 A1
- EP 0594071 A1
- EP 0594142 A1
- EP 0982800 A1
- EP 0844286 A1
- WO 9840170 A
- DE 19914896 A1
- DE 19709465 A
- DE 19709476 C
- DE 2848906 A
- DE 19524182 A
- EP 0554783 A
- WO 9527742 A
- DE 3841540 A
- WO 8202387 A
- DE 3807571 A
- DE 3706095 A
- EP 0358153 B
- US 4754014 A
- DE 4421823 A
- WO 9222615 A
- US 4444954 A
- US 4939213 A
- US 5084541 A
- EP 0624577 A
- US 4710542 A
- EP 0245700 B
- DE 19809643 A1
- DE 19840605 A1
- DE 19805421 A1
- WO 9422968 A
- EP 0276501 A
- EP 0249201 A
- WO 9712945 A
- EP 0008127 A
- DE 19930664 A1
- DE 19818735 A1


### In der Beschreibung aufgeführte Nicht-Patentliteratur


- »Hydrophille«, »Hydrophoble«. Römpp Lexikon Lacke und Druckfarben. Georg Thleme Verlag, 1998, 294, 295
- **Houben Weyl.** Methoden der organischen Chemie. 1961, vol. 14/1, 24-255
- **Houben-Weyl.** Methoden der organischen Chemie. Georg Thieme Verlag, 1963, vol. 14/2, 61-70
- **W. Siefken.** Liebigs Annalen der Chemie. vol. 562, 75-136
- **B. Singh ; Mitarbeiter.** Carbamylmethylated Melamines, Novel Crosslinkers for the Coatings Industry. *Advanced Organic Coatings Science and Technology Series,* 1991, vol. 13, 193-207
- Römpp Lexikon Lacke und Druckfarben. Georg Thieme Verlag, 1998, 491
- Römpp Lexikon »Lacke und Druckfarben«. Georg Thieme Verlag, 1998, 250-252
- **Johan Bieleman.** Lehrbuch »Lackadditive«. Wiley-VCH, 1998
- **Roger Talbert.** *Industrial Paint & Powder,* 30-33
- Curing in Seconds with NIR. *Galvanotechnik,* vol. 90 (11), 3098-3100
- **R. Holmes, U.V. ; E.B. Curing.** Formulations for Printing Inks, Coatings and Paints, SITA Technology. Academic Press, 1984